# EUROPEAN PATENT APPLICATION

(11) **EP 4 538 524 A1**
(43) Date of publication of application: **16.04.2025**
(21) Application number: 23202966.0
(22) Date of filing: 11.10.2023
(51) Int. Cl.: F03D 1/06

(54) **METHOD FOR JOINING TWO ROTOR BLADE SEGMENTS OF A WIND TURBINE ROTOR BLADE, SIGNAL TRANSMITTING DEVICE, SIGNAL RECEIVING DEVICE**

(71) Applicant: Nordex Energy SE & Co. KG, 22419 Hamburg (DE)
(72) Inventor: Lipka, Thomas, 22419 Hamburg (DE); Baars, Uwe, 22419 Hamburg (DE)
(74) Representative: Völkl Siebenson Patentanwälte - Partnerschaft mbB

(57) **Abstract**

The invention concerns a method of connecting two rotor blade segments (132, 134) of a wind turbine rotor blade (110), comprising the steps of:
- providing a first rotor blade segment (132) with a first bushing (140) and a second rotor blade segment (134) with a second bushing (142),
- inserting a signal transmitting device (156) into the first bushing (140) and inserting a signal receiving device (174) into the second bushing (142),
- emitting an electromagnetic signal by the signal transmitting device (156), and
- aligning the first rotor blade segment (132) and the second rotor blade segment (134) relative to each other,
- removing both the signal transmitting device (156) from the first rotor blade segment (132) and the signal receiving device (174) from the second rotor blade segment (134), and
- tightly interconnecting the first bushing (140) and second bushing (142).

The invention also refers to a signal transmitting device (156) and a signal receiving device (174).

## Description

The invention concerns a method for joining two rotor blade segments of a wind turbine rotor blade. The invention also concerns a signal transmitting device and a signal receiving device.

Wind turbines with wind turbine rotor blades are widely known from the state of the art and are used to convert wind energy into electrical energy. A rotor blade can be designed as a split or segmented rotor blade, in which rotor blade segments are arranged and joined together lengthwise to form an entire rotor blade. Mechanical connections are generally used to join the two rotor blade segments. Typically, a plurality of connection elements (so-called inserts, for example cross bolts or bushings) is integrated into the laminate of each rotor blade segment, by means of which the rotor blade segments can be connected to each other, either directly or via one or more suitable intermediate connection pieces. Typically, fastening means or connecting means such as fastening bolts, e.g. screw bolts, or the like are used for a direct connection or for connecting to the one or more intermediate connection pieces. A generic structure is known, for example, from international application WO 2015/124568 A1.

Segmented rotor blades are becoming increasingly important and provide advantages, in particular for transport reasons, since the overall length of the rotor blades tends to increase in order to achieve a higher energy output.

A known challenge with regard to segmented rotor blades is that the rotor blade segments need to be aligned perfectly prior to being connected, e.g. at the installation site. Before the alignment, the rotor blade segments are placed in supports, e.g. racks.

One object underlying the present invention is to provide a concept for segmented rotor blades which ensures a reliable assembly process.

This object is achieved by the independent claims and the respective sub-claims.

According to an aspect, a method of connecting two rotor blade segments of a wind turbine rotor blade is disclosed. The method comprises the steps of:
- providing a first rotor blade segment having at least a first bushing at a first connection end,
- providing a second rotor blade segment having at least a second bushing at a second connection end, the second connection end being assigned to the first connection end,
- inserting a signal transmitting device into the first bushing,
- inserting a signal receiving device into the second bushing,
- emitting an electromagnetic signal by the signal transmitting device, and
- aligning the first rotor blade segment and the second rotor blade segment relative to each other, depending on a reception of the electromagnetic signal by the signal receiving device, such that a first central longitudinal axis of the first bushing is coaxial with a second central longitudinal axis of the second bushing and both central longitudinal axes form a common longitudinal axis,
- removing both the signal transmitting device from the first rotor blade segment and the signal receiving device from the second rotor blade segment, and
- tightly interconnecting the first bushing and the second bushing to mechanically connect the two rotor blade segments to one another at the connection ends to form the wind turbine rotor blade.

The described method enables a reliable assembly process for fixedly connecting two rotor blade segments. The described method relies on the bushings which provide very good orientation points in contrast, for example, to the outer rotor blade surface, which has a three-dimensional contour typically associated with comparatively large tolerances. The bushings are, for example, made from metal (very small tolerances) and are located very precisely in the blade segments as is needed for successful assembly. Since the bushings, however, are hidden inside the surrounding laminate of the respective blade segments, the signal transmitting and signal receiving devices are provided, which are inserted into both bushings and allow for a very precise alignment of both rotor blade segments relative to one another. This means that ideally a) all central longitudinal axes of the corresponding bushings are exactly opposite to each other and b) all bushings are collinear to each other. A subsequent connection of the segments via bolts can be done with very little or even no loads on the bolts, in particular no bending-forces or tensions acting on the bolts.

The signal transmitting device and the signal receiving device can be summarized as a measuring device. The signal transmitting device and the signal receiving device are inserted into corresponding bushings. The bushings are assigned to each other and form a pair of bushings for one mechanical connection. For alignment, the signal transmitting device sends out an electromagnetic signal to be received by the signal receiving device. Depending on the reception of the signal, an offset of the first and second longitudinal axes of the bushings can be very exactly derived. Depending on the offset, the rotor blade segments need to be aligned to each other until an allowable offset or no offset is achieved. The signal transmitting device and the signal receiving device allow a very precise and repeatable alignment of the two bushings and thus the rotor blade segments at certain distances and angles relative to each other.

Some advantages of the disclosed method, in particular of the measuring device, are as follows:
- The measuring device can be used for any sizes of segmented rotor blades and its connection ends with bushings.
- The measuring device can be adapted to construction site conditions during the erection of wind turbines and can thus be easily used during a field assembly.
- The alignment of two rotor blade segments can be performed directly at the location of the connecting elements, e.g. the bushings.
- A documentable quality assurance in this quality-driving process step of assembling a segmented sheet is possible.
- High precision and repeatability can be ensured.
- (Fast) Data acquisition, e.g. of the offset, is possible by suitable means, e.g. sensors or the like.
- It is possible to electronically/digitally acquire data, e.g. of the offset, and transfer to a fully automated alignment device.
- The measuring device allows for easy handling, operation and maintenance.

As described, the signal transmitting device is inserted into the first bushing and the signal receiving device is inserted into the second bushing. However, here and in the following, the reverse case also applies.

The first and second central longitudinal axes of the bushings are bore axes of the respective bushings or rotational axes or middle longitudinal axes.

For example, the electromagnetic signal is received electronically or analog. The electromagnetic signal can be displayed by the signal receiving device, either digitally or analog, e.g. by reflection of light being visible for a human. The electromagnetic signal can also be an infrared signal. In any case, the signal receiving device comprises suitable means for receiving and/or displaying the electromagnetic signal.

In the step of tightly interconnecting, a single bolt can be used to connect the two bushings. Alternatively, an intermediate piece and two bolts can be used, wherein one bolt connects the intermediate piece to the first bushing and the other bolt connects the intermediate piece to the second bushing.

In the step of aligning, preferably one of the two rotor blade segments is stationary fixed, whereas the other one of the two rotor blade segments is moved, e.g. translationally and rotationally. For example, for moving, the respective rotor blade segment is fixedly supported on a movable support structure, in particular on a moveable table or moveable skid.

In the step of aligning, the movable rotor blade segment can be moved and/or turned several times to find the ideal orientation. After the alignment of the rotor blade segments the first and the second central longitudinal axis of the bushings form the common longitudinal axis.

After the step of aligning, at least one of both rotor blade segments may be moved away from the other rotor blade segment. Thus, the measuring device, i.e. the signal transmitting device and the signal receiving device, can be removed easily. In particular, only a movement along one direction, in particular the common longitudinal axis is allowed. Movement in other directions and the rotation of the respective rotor blade segment is blocked. In other words, the orientation found for the respective rotor blade segment is frozen.

Alternatively, such step of moving away might not be necessary, if the distance between both rotor blade segments, e.g. after the step of aligning, is larger than an axial length of the measuring devices. Thus, the signal transmitting device and the signal receiving device can be removed easily without further movement of at least one rotor blade segment.

For the step of tightly interconnecting, at least one of both rotor blade segments may be moved towards the other rotor blade segment, e.g. along the common longitudinal axis. Thus, the bushings can be easily connected to each other.

According to an embodiment, - in the steps of inserting - the signal transmitting device and the signal receiving device are inserted into the respective first bushing or second bushing in a form-fit manner. Preferably, only a form-fit engagement is provided. This allows an easy and fast mounting and alignment. It is also possible that additionally a force-fit (also named frictional-fit or frictional connection) is established. Thus, the signal transmitting device or the signal receiving device are jammed inside the respective bushing. The force-fit is just strong enough that the signal transmitting device or the signal receiving device can still be removed manually, e.g. by hand. Thus, a low force-fit or a jamming with low friction is established. As an example, an outer contact surface of the signal transmitting device and the signal receiving device can be provided with small hemispherical local thickenings, e.g. along a shaft of the devices, in order to cause such a jamming inside the bushings.

According to an embodiment, - in the steps of inserting - the signal transmitting device and the signal receiving device are screwed into the respective first bushing or second bushing. Thus, a form-fit and force-fit connection is achieved, allowing for a very stable and reliable connection and subsequently for a very precise alignment.

According to an embodiment, the electromagnetic signal has a wavelength within the visible spectrum. In other words, the wavelength is within the range of 400 nm to 800 nm. In other words, the electromagnetic signal is visible to the human eye. Thus, the electromagnetic signal can be simply displayed at the signal receiving device, e.g. by reflecting at a display area.

According to an embodiment, the signal transmitting device comprises a laser device. For example, the laser device is a commercially available laser pointer, e.g. having a cylindrical outer shape. The laser device is configured, for example, to emit monochromatic light with essentially one wavelength, but polychromatic light is also possible. The laser device contributes to the above-mentioned functions and advantages. In particular, the laser can easily be made visible at the signal receiving device by simply reflecting the (red) laser light.

According to an embodiment, the laser device is arranged such that a laser beam emitted by the laser device is coaxial with the first central longitudinal axis of the first bushing. This contributes to the easy and reliable alignment of the rotor blade segments, wherein it only has to be ensured that, after the step of aligning, the laser beam is coaxial to the second central longitudinal axis.

According to an embodiment, the signal transmitting device comprises a first outer tube for insertion into the first bushing, and an inner tube, wherein the laser device is received within the first outer tube and the inner tube is screwed into the first outer tube and thereby fixes the laser device in the first outer tube. Thus, a fixed assembly unit is formed by the outer and inner tube and the laser device. In other words, a multi-part sleeve or tube concept is proposed. The tube-like structure allows for a form-fit and thus easy mounting. The laser device is safely embedded and held within the outer tube. Thus, a commercially available, conventional laser device can be used, wherein only the tubes need to be adapted to the design of the respective bushing into which the signal transmitting device is inserted. For screwing and fixation, the first outer tube comprises an inner thread and the inner tube comprises an outer thread for the thread engagement between the inner and first outer tube.

According to an embodiment, the signal transmitting device comprises a first abutment element, which limits the insertion of the signal transmitting device into the first bushing. Thus, a fast and reliable insertion of the pin into the respective bushings is enabled. Additionally, the abutment element provides a stop for the laser device inserted into the first outer tube. For example, the abutment element is formed on the first outer tube, e.g. on a flange thereof. The abutment element can be a ring or a disc, e.g. with a hole for the electromagnetic signal to be emitted out of the outer tube towards the signal receiving device.

According to an embodiment, the signal receiving device comprises at least a second outer tube for insertion into the second bushing. Thus, an easy form-fit and/or force-fit mounting is possible.

According to an embodiment, the signal receiving device comprises a second abutment element, which limits the insertion of the signal receiving device into the second bushing. We refer to the above with respect to the first abutment element, which analogously applies.

According to an embodiment, the signal receiving device comprises a measuring disc for receiving the electromagnetic signal from the signal transmitting device. For receiving the electromagnetic signal, the measuring disc can be a simple display device, e.g. a kind of a canvas, a projection screen or the like, for displaying the electromagnetic signal by reflection or an electronic device, e.g. a LCD or LED display, to electronically display the received electromagnetic signal.

According to an embodiment, the measuring disc forms the second abutment element. Thus, the measuring disc fulfills at least two functions.

According to an embodiment, an alignment tube is arranged at a distance in front of the measuring disc and the step of aligning is performed depending on the electromagnetic signal passing through the alignment tube. In order to evaluate a tilting of the two rotor blade segments, the alignment tube is provided, which is arranged in particular coaxially to the second central longitudinal center axis. The alignment tube is located at a certain distance from the measuring disc and can also be referred to as a tunnel or satellite. The alignment tube is designed to be just long enough and large enough that the electromagnetic signal, such as the above-described laser beam, can only pass through it under a permissible tilt of its signal propagation axis with respect to the second central longitudinal axis of the second bushing. The electromagnetic signal, e.g. the laser beam, can thus only hit the measuring disc and thus be received if the permissible tilting of its signal propagation axis is not exceeded.

According to an embodiment, the measuring disc is configured to display the received electromagnetic signal and has a measuring scale, wherein the measuring scale defines a center point corresponding to the second central longitudinal axis of the second bushing, and wherein the step of aligning is performed depending on the displayed electromagnetic signal with respect to the center point of the measuring scale. The measuring scale, also named "measuring grid", allows for a precise and efficient alignment of the rotor blade segments to each other. The embodiment is particularly advantageous in combination with the signal transmitting device comprising a laser device and/or the above-described alignment tube. For example, the center of the measuring scale corresponds to the center of the second insert and/or the center of the alignment tube. If an electromagnetic signal, such as a laser beam, strikes the measuring disc, the received signal, such as a red laser dot, can be used to obtain information about an axial displacement and/or tilt between the two bushings and thus the two rotor blade segments, via the measuring scale.

According to an embodiment, the measuring disc comprises a photosensitive layer. The position of the received electromagnetic signal can be determined by means of the photosensitive layer. The step of aligning can be performed depending on the detected position. The photosensitive layer comprises several photodiodes for receiving the electromagnetic signal. This allows, for example, the received electromagnetic signal to be further processed electronically or digitally.

According to an embodiment, data corresponding to a detected impact position on the measuring disc is sent to a control unit which is configured to cause the first rotor blade segment and/or the second rotor blade segment to be automatically moved in the step of aligning depending on the data. For example, this allows the moveable support structure of the first and/or second rotor blade segment, e.g. the moveable skid, to adjust itself to the preferred alignment position, e.g. via electromechanical components.

According to an embodiment, after the step of aligning, an orientation of both rotor blade segments to each other is frozen such that only a movement of the first rotor blade segment or second rotor blade segment is allowed along the common longitudinal axis. For example, the second rotor blade segment is fixedly supported on a moveable support structure, e.g. a moveable skid. During alignment, the second rotor blade segment can be moved by means of the moveable support structure. As soon as the intended orientation is found, the orientation found for the second rotor blade segment is "mechanically saved". In other words, the orientation is frozen, meaning that the second rotor blade segment is supported and held stationary such that only axial movement along the common longitudinal axis is possible.

According to an embodiment, the orientation of both rotor blade segments to each other is frozen until the two rotor blade segments are tightly connected. This ensures a reliable and precise connection.

According to an embodiment, in the step of aligning, the first rotor blade segment or the second rotor blade segment is translationally and rotationally movable so that the central longitudinal axes of the first and second bushing can be coaxially matched to each other to form the common longitudinal axis. This contributes to the above-mentioned functions and advantages.

According to an embodiment, for aligning, the first rotor blade segment or the second rotor blade segment is fixedly supported on a movable support structure, in particular on a moveable skid. This contributes to the above-mentioned functions and advantages.

According to an embodiment, several pairs of one signal transmitting device and one signal receiving device are provided, wherein for each pair the signal transmitting device is inserted into a first bushing of the first rotor blade segment and the signal receiving device is inserted into a second bushing assigned to the first bushing, and wherein the step of aligning is performed depending on all pairs. This significantly increases efficiency and accuracy when aligning the two rotor blade segments. For example, six signal transmitting devices and signal receiving devices are used. Preferably, in each rotor blade segment, the first and second bushings at the trailing edge, leading edge and at a maximum profile height of the rotor blade segments are equipped with the signal transmitting devices or signal receiving devices. This particularly compensates for the fact that blade segments are typically formed from prefabricated half-shells which are subject to manufacturing variations and whose nominal contour is roughly tolerated in comparison. With a measuring device at each edge of a half shell (leading and trailing edge) and in the center of the profile (maximum profile height), this contour can be broken down into three measuring points, for example laser points, and thus mapped accurately enough. A contour deviation of the half shells to each other can thus be effectively avoided.

According to an embodiment, prior to the steps of inserting, a rough alignment of both rotor blade segments to each other is performed, comprising the sub-steps of:
- providing a longitudinally extending alignment pin, which has at least a first longitudinal section and a second longitudinal section,
- inserting the alignment pin into the first bushing such that the first longitudinal section is received in the first bushing and the second longitudinal section protrudes out of the first bushing,
- aligning the second rotor blade segment by means of the inserted alignment pin, wherein the second rotor blade segment is moved onto the alignment pin, such that
   -- the second longitudinal section of the alignment pin is received in the second bushing, and
   -- a first central longitudinal axis of the first bushing (140) is coaxial with a second central longitudinal axis of the second bushing (142) and both central longitudinal axes form a common longitudinal axis,
- moving the second rotor blade segment (134) away from the first rotor blade segment (132) along the common longitudinal axis,

- removing the alignment pin from the first rotor blade segment.

In order to manage the accurate positioning of the two blade segments by means of the measuring device(s) as described above, the connection ends of both blade segments are brought together in advance and roughly aligned with each other, e.g. with one or more alignment pins. The blade segments are then pushed apart again (for example the lighter blade segment is mounted on a support and adjustment device located on rails) and then equipped with the measuring device(s). This contributes to a very efficient alignment process.

According to a further aspect, a signal transmitting device for a method of connecting two rotor blade segments of a wind turbine rotor blade according to an embodiment of the first aspect is disclosed. The signal transmitting device is configured to:
- be inserted into a first bushing of the first rotor blade segment, and
- send out an electromagnetic signal to be received by a signal receiving device such that, depending on a reception of the electromagnetic signal, the first rotor blade segment and the second rotor blade segment can be aligned relative to each other.

According to a further aspect, a signal receiving device for a method of connecting two rotor blade segments of a wind turbine rotor blade according to an embodiment of the first aspect is disclosed. The signal receiving device is configured to:
- be inserted into a second bushing of the second rotor blade segment, and
- receive an electromagnetic signal of a signal transmitting device such that, depending on the reception of the electromagnetic signal, the first rotor blade segment and the second rotor blade segment can be aligned relative to each other.

The signal transmitting device and the signal receiving device according to the further aspects each enable the above-mentioned functions and advantages. The above-described embodiments with respect to the first aspect similarly apply to the signal transmitting device and the signal receiving device according to the further aspects.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a segmented rotor blade with two rotor blade segments,
Figure 3 shows a schematic sectional view of an exemplary bolt connection of two rotor blade segments,
Figure 4 shows a first rotor blade segment,
Figure 5 shows a first bushing,
Figure 6 shows a second rotor blade segment,
Figure 7 shows a second bushing,
Figures 8 to 10 refer to a signal transmitting device according to an embodiment of the invention,
Figure 11 shows the signal transmitting device inserted into the first bushing,
Figure 12 shows a signal receiving device according to an embodiment of the invention,
Figure 13 shows an aligning step,
Figure 14 shows the two rotor blade segments and several signal transmitting and receiving devices,
Figure 15 shows the first and second rotor blade segment in a final aligned state, and
Figure 16 shows a schematic flow diagram of a method of connecting two rotor blade segments according to the embodiment of the invention.

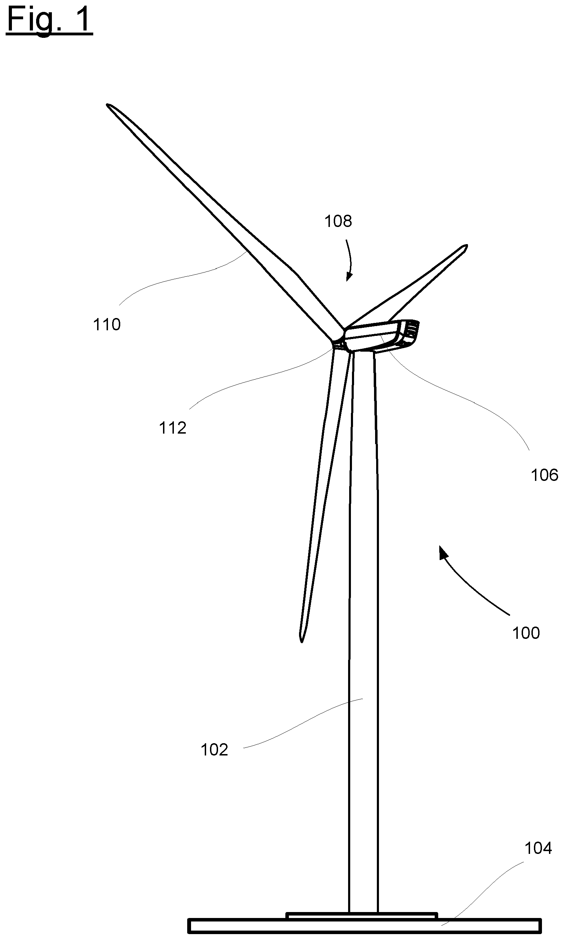

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the kinetic energy of the rotor 108 into electrical energy.

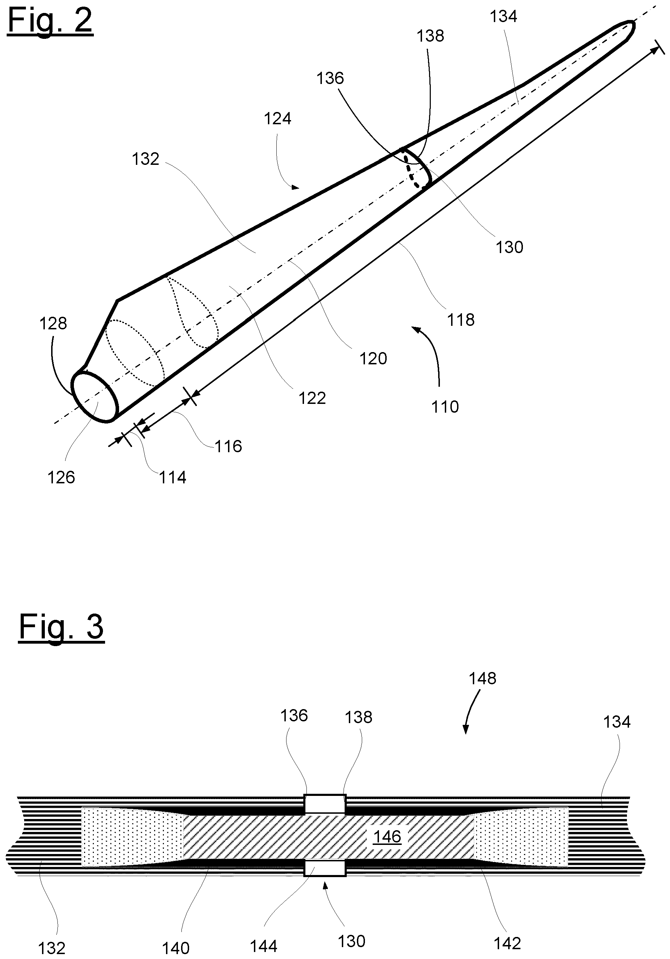

Figure 2 shows an exemplary wind turbine rotor blade 110. The rotor blade 110 has the shape of a conventional rotor blade and has a rotor blade root area 114 facing the rotor hub 112.

The rotor blade root area 114 typically has an essentially circular cross-section. The rotor blade root area 114 is followed by a transition area 116 and a profile area 118 of the rotor blade 110. The rotor blade 110 has a pressure side 122 and an opposite suction side 124 with respect to a longitudinal extension direction 120 (also main extension direction). The rotor blade 110 is essentially hollow inside.

In the rotor blade root area 114 a rotor blade connection end 126 with a flange connection 128 is provided, by means of which the rotor blade 110 is mechanically connected to a pitch bearing or an extender.

The rotor blade 110 comprises a division area 130 where a blade-root-side rotor blade segment 132 (first rotor blade segment) and a blade-tip-side rotor blade segment 134 (second rotor blade segment) are connected to each other. For this purpose, both segments 132, 134 comprise a respective connection region 136, 138 (also connection ends) each. The rotor blade 110 is thus a split rotor blade, as described above. Embedded into each connection end 136, 138 is a multitude of bushings 140 and 142, which are arranged according to the profile of the rotor blade 110 (in circumferential direction) and comprise internal threads for the reception of connecting bolts 146 to fixedly connect the segments 132, 134 (see Figure 3). The bolts 146 are also called bearing bolts or screw bolts. One or both connection ends 136, 138 is/are realized, for example as a flange insert, which is inserted as a prefabricated insert (with the bushings embedded therein) into a production mould for the manufacture of the rotor blade 110. However, it is also conceivable that no flange insert is provided and the bushings are embedded and laminated directly into the rotor blade half shells. The bushings are metal bushings, e.g. steel bushings, for example.

Figure 3 shows a schematic sectional view in a partial area of two connected rotor blade segments 132, 134 at the division area 130, where a single bolt connection 148 is exemplarily shown. The connecting bolt 146 is screwed into a pair of aligned first and second bushings 140, 142 to mechanically connect the two connection ends 136, 138 and thus the two rotor blade segments 132, 134. Likewise, the further pairs of first and second bushings 140, 142 are connected by respective connecting bolts 146.

Optionally as shown in Figure 3, a pretensioning unit 144 is clamped between the two connection ends 136, 138 per bolt connection 148. The bolts 146 can be preloaded with the help of the pretensioning units 144. For example, a pretensioning unit 144 is a hydraulic nut.

Typically, the two rotor blade segments 132, 134 are mounted together at the erection site of the wind turbine 100. For this purpose, the two segments 132, 134 need to be optimally aligned with respect to each other, so that the large number of connecting bolts 146 can be screwed in as easily as possible.

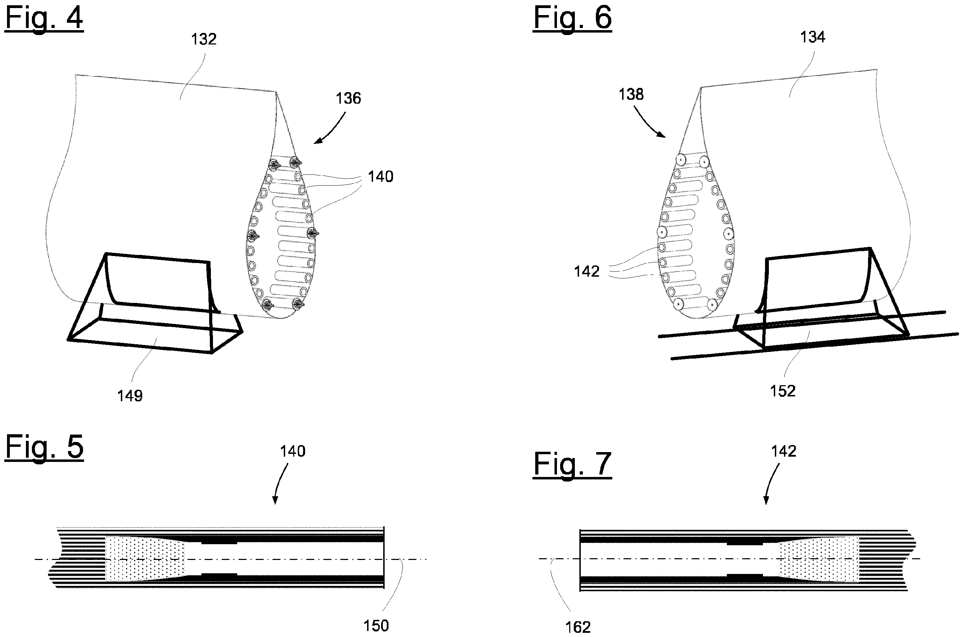

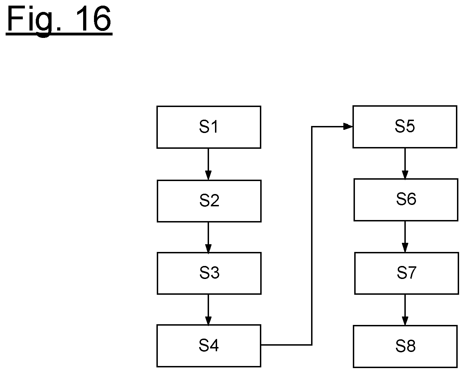

In the following, an improved method for connection of the two rotor blade segments 132, 134 is described. Embodiments of the invention are described with respect to Figures 4 to 16, wherein Figure 16 shows a schematic flow diagram of the method.

In a first step S1, the first rotor blade segment 132 is provided. Figure 4 schematically shows the first rotor blade segment 132 with a plurality of first bushings 140 at the first connection end 136. The first rotor blade segment 132 is stationary and fixedly supported on a support structure 149 (only schematically indicated in Figure 4). In other words, the first rotor blade segment 132 is not moveable in the present example.

Figure 5 schematically exemplarily shows a first bushing 140 at the first connection end 136. The first bushing 140 has a first central longitudinal axis 150, which is the rotational middle axis in the present example.

It is noted at this point that here and in the following details of the rotor blade segments 132, 134, apart from the bushings 140, 142, are omitted for the sake of clarity.

In a next step S2, the second rotor blade segment 134 is provided, which has a plurality of second bushings 142 at the second connection end 138, the second connection end 138 being assigned to the first connection end 136 (see figure 6). The second rotor blade segment 134 is fixedly supported on a movable skid 152 (only schematically indicated in Figure 6). With the moveable skid 152, the second rotor blade segment 134 can be moved translationally and rotationally with respect to the first rotor blade segment 132.

Figure 7 schematically shows a second bushing 142. The second bushing 142 has a second central longitudinal axis 154, which is the rotational middle axis in the present example.

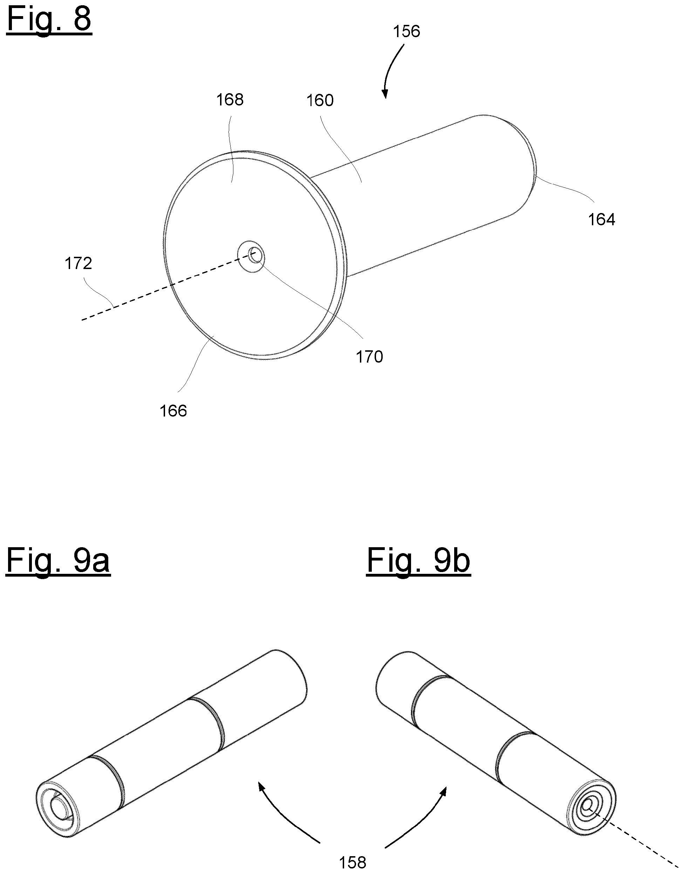

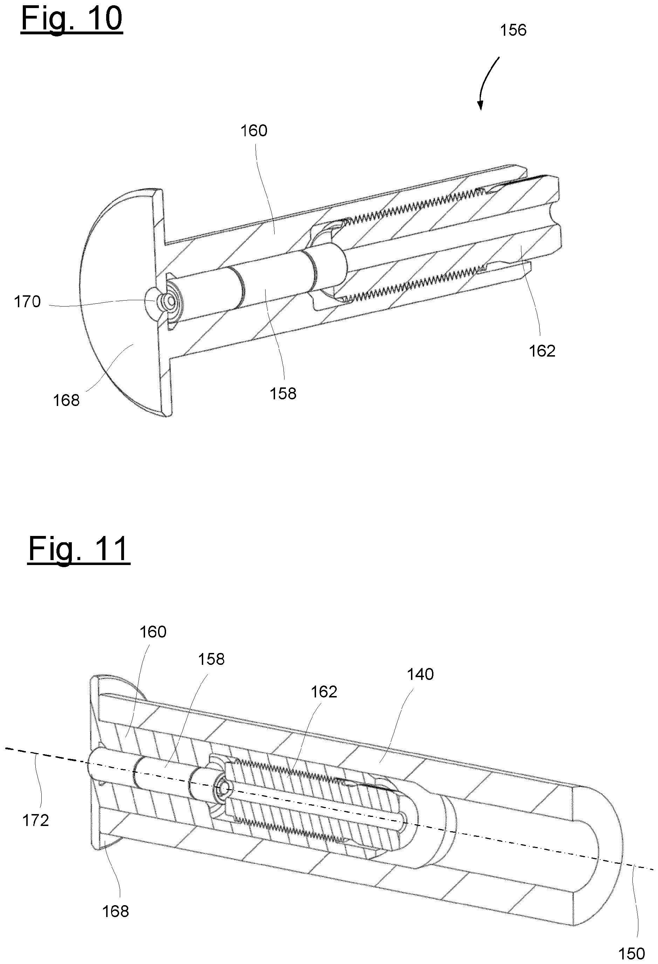

In a next step S3 a signal transmitting device 156 is provided (see figure 8) to be inserted into a respective first bushing 140. The transmitting device 156 is a multi-part tube that comprises a laser device 158 inside, which is shown in figures 9a from the back and 9b from the front. In the present example, the laser device 158 is a commercially available point laser. With regard to the cross-sectional view of figure 10, the signal transmitting device 156 comprises a first outer tube 160 and an inner tube 162. The laser device 158 is pushed slidingly into the first outer tube 160 in a form-fit manner until it is in contact with the abutment element 168. The inner tube 162 is screwed into the first outer tube 160 and against the laser device 158 to hold it within the first outer tube 160. Due to the multi-part tube structure, the laser device 158 can be changed easily.

The signal transmitting device 156 has a first end 164 and an opposite second end 166. As can be seen from figure 11, the signal transmitting device 156 is inserted into the first bushing 140 with the first end 164 in a solely form-fit manner. In this regard, the first outer tube 160 has an accordingly shaped cylindrical outer contour. At the second end 166, which is the front face, the signal transmitting device 156 comprises a first disc 168, which serves as a first abutment element for limiting an insertion into the first bushing 140.

The signal transmitting device 156 is configured to emit a laser beam 172 corresponding to the above-mentioned electromagnetic signal with at least a wavelength within the visible spectrum. For this reason, the signal transmitting device 156 has an opening 170 at the first end 164, namely in the first disc 168, through which the laser beam 172 can pass.

Figure 11 exemplarily shows the signal transmitting device 156 being inserted into the first bushing 140. The laser device 158 is arranged such that the laser beam 172 is coaxial with the first central longitudinal axis 150 of the first bushing.

It is noted that the laser device 158 can be switched on prior to inserting the signal transmitting device 156 into the first bushing 140. For example, in the assembled state, an actuation element, e.g. an actuation rod, could be inserted into the inner tube 162 at the first end 164. The actuation element is pushed through the inner tube 162 against the laser device 158, e.g. against a switch, to switch on the laser device 158. Of course, depending on the laser device 158, switching on the laser device 158 could also happen wirelessly, e.g. via a Bluetooth connection and suitable means, e.g. a mobile device. With a wireless connection, it is also possible to switch on the device after having inserted the signal transmitting device 156 into the first bushing 140.

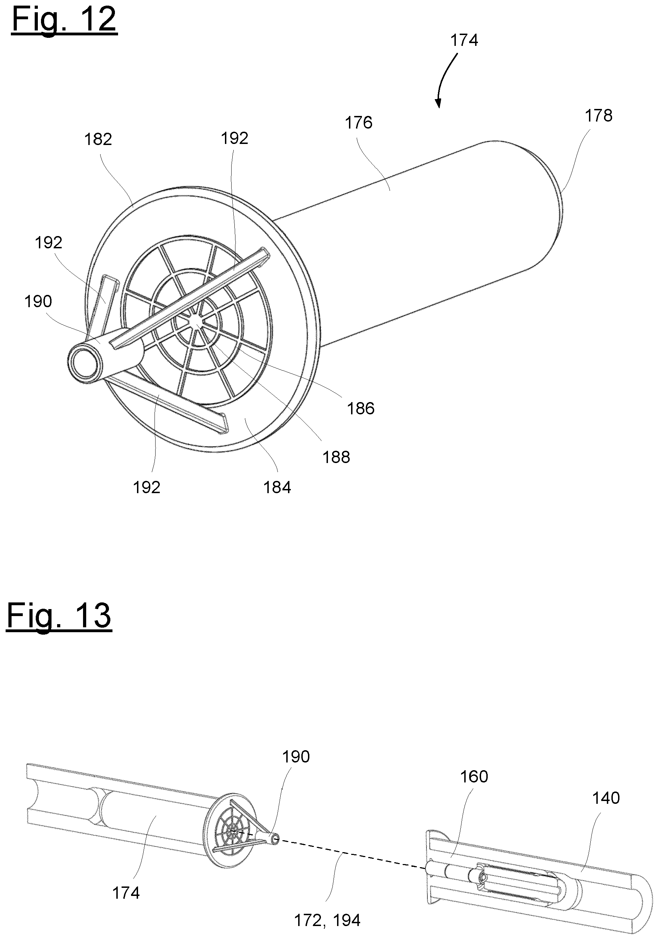

In a next step S4 a signal receiving device 174 is provided (see figure 12) to be inserted into a respective second bushing 142, which corresponds to the first bushing 140 in which the signal transmitting device 156 is inserted. As shown in figure 12, the signal receiving device 174 comprises a second outer tube 176. The signal receiving device 174 has a first end 178 and an opposite second end 180. Analog to the signal transmitting device 156, the signal receiving device 174 is inserted into the second bushing 142 with the first end 178. At the second end 180, the signal receiving device 174 comprises a measuring disc 182, which serves as a second abutment element to limit an insertion into the second bushing 142.

The measuring disc 182 is configured to receive the emitted laser beam 172 of the signal transmitting device 156. The measuring disc 182 comprises a suitable display surface 184 for making the impacting laser beam 172 visible. Thus, a red point is visible if the laser beam 172 impacts the measuring disc 182. The measuring disc 182 further has a measuring scale 186 with a center point 188, e.g. printed on the display surface 184. The center point 188 corresponds to the center of the second bushing 142, i.e. the second central longitudinal axis 154 of the second bushing 142.

Further, the signal receiving device 174 comprises an alignment tube 190, which is located at a certain distance from the measuring disc 182. The alignment tube 190 is further arranged to be on the same longitudinal axis, i.e. the second central longitudinal axis 154 of the second bushing 142, if the signal receiving device 174 is inserted into the second bushing 142. The alignment tube 190 is held on the signal receiving device 174 by one or more webs 192 connected to the measuring disc 182.

In a next step S5, the signal transmitting device 156 emits the laser beam 172 in the direction of the signal receiving device 174 (see figure 13).

In a next step S6, with respect to figure 13, the first rotor blade segment 132 and the second rotor blade segment 134 are aligned relative to each other, depending on a reception of the laser beam 172 by the signal receiving device 174. If the laser beam 172 hits the measuring disc 182, this red point can be evaluated via the measuring scale 186. In particular, knowledge can be gained about whether there is an axis shift to the signal transmitting device 156. In other words, it can be determined how the first central longitudinal axis 150 and the second central longitudinal axis 154 are aligned with respect to each other. To evaluate a tilt of the signal transmitting axis, which corresponds to the first central longitudinal axis 150, with respect to the center axis of the measuring disc 182, which corresponds to the second central longitudinal axis 154, the alignment tube 190 is provided through which the laser beam 172 can pass only under certain permissible tilts. Thus, the laser beam 172 hits the measuring disc 182 only when the laser beam 172 does not exceed the permissible tilting.

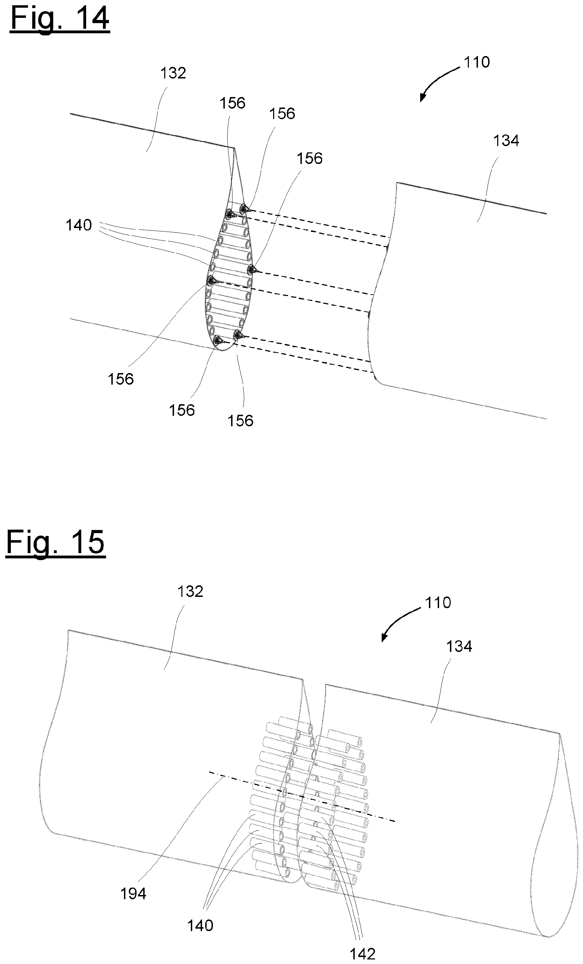

Depending on the reception of the laser beam 172 at the measuring disc 182, the second rotor blade segment 134 is moved translationally and/or rotationally via the moveable skid 152 such that the first central longitudinal axis 150 of the first bushing 140 is coaxial with the second central longitudinal axis 154 of the second bushing 142 and both central longitudinal axes 150,154 form a common longitudinal axis 194 (indicated in figures 13 and 15).

In a next step S7, both the signal transmitting device 156 and the signal receiving device 174 are removed from the first rotor blade segment 132 and from the second rotor blade segment 134.

In a next step S8, the first bushing 140 and the second bushing 142 are tightly interconnected by a connecting bolt 148 to mechanically connect the two rotor blade segments 132, 134 to one another at the connection ends 136, 138 to form the wind turbine rotor blade 110.

Figure 15 exemplarily shows the final state, exemplarily indicating a common longitudinal axis 174 for one pair of bushings 140, 142 as well as some connecting bolts 148 for illustrative reasons.

The described method enables the above-mentioned functions and advantages.

In the above description of the method, reference is made to one bolt connection 148. Likewise, the described method is applicable to several bolt connections 148.

Furthermore, reference is made to aligning both rotor blade segments 132, 134 via one pair of the signal transmitting device 156 and signal receiving device 174. However, as already mentioned above, several pairs of a signal transmitting device 156 and signal receiving device 174 can be used, as is schematically indicated in figure 14.

Optionally, further steps may be possible. For example, after step S6 of aligning, the orientation of both rotor blade segments 132, 134 to each other is frozen such that only a movement of the second rotor blade segment 134 is allowed along the common longitudinal axis 194. This means that the correct orientation of the second rotor blade segment 134 is saved and does not need to be set again at a later step, e.g. when the signal transmitting device 156 and the signal receiving device 174 are removed. Particularly, the orientation of both rotor blade segments 132, 134 to each other is frozen until the two rotor blade segments 132, 134 are tightly connected according to step S8.

Alternatively to the above-described embodiment, the first rotor blade segment 132 is moved in the step of aligning. Thus, the first rotor blade segment 132 is supported on a moveable skid, whereas the second rotor blade segment 134 is stationarily supported.

Alternatively to the above-described embodiment, the signal transmitting device 156 can be inserted into the second bushing 142, whereas the signal receiving device 174 is inserted into the first bushing 140.

It is possible, that a rough alignment is performed prior to the above-described alignment via the signal transmitting and receiving devices 156, 174, e.g. using an alignment pin as described above.

Before, during and after the alignment of the blade segments 132, 134, photographs of the measuring disc 182 in operation (i.e. with the laser point of the signal transmitting device 156 visible) can be taken for documentation reasons. In this way, the quality of the alignment is measurable and repeatable, and thus the measured values of the axis offsets of the opposing bushings 140, 142 are available over the entire life cycle of the segmented wind turbine rotor blade 110.

### Reference signs

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal extension direction
- 122: pressure side
- 124: suction side
- 126: rotor blade connection end
- 128: flange connection
- 130: division area
- 132: first rotor blade segment
- 134: second rotor blade segment
- 136: first connection end
- 138: second connection end
- 140: first bushing
- 142: second bushing
- 144: pretensioning unit
- 146: connecting bolt
- 148: bolt connection
- 149: support structure
- 150: first central longitudinal axis
- 152: moveable skid
- 154: second central longitudinal axis
- 156: signal transmitting device
- 158: laser device
- 160: first outer tube
- 162: inner tube
- 164: first end
- 166: second end
- 168: first disc
- 170: opening
- 172: laser beam
- 174: signal receiving device
- 176: second outer tube
- 178: first end
- 180: second end
- 182: measuring disc
- 184: display surface
- 186: measuring scale
- 188: center point
- 190: alignment tube
- 192: web
- 194: common longitudinal axis

## Claims

1. Method of connecting two rotor blade segments (132, 134) of a wind turbine rotor blade (110), the method comprising the steps of:
- providing a first rotor blade segment (132) having at least a first bushing (140) at a first connection end (136),
- providing a second rotor blade segment (134) having at least a second bushing (142) at a second connection end (138), the second connection end (138) being assigned to the first connection end (136),
- inserting a signal transmitting device (156) into the first bushing (140),
- inserting a signal receiving device (174) into the second bushing (142),
- emitting an electromagnetic signal by the signal transmitting device (156), and
- aligning the first rotor blade segment (132) and the second rotor blade segment (134) relative to each other, depending on a reception of the electromagnetic signal by the signal receiving device (174), such that a first central longitudinal axis (150) of the first bushing (140) is coaxial with a second central longitudinal axis (154) of the second bushing (142) and both central longitudinal axes (150, 154) form a common longitudinal axis (194),
- removing both the signal transmitting device (156) from the first rotor blade segment (132) and the signal receiving device (174) from the second rotor blade segment (134), and
- tightly interconnecting the first bushing (140) and second bushing (142) to mechanically connect the two rotor blade segments (132, 134) to one another at the connection ends (136, 138) to form the wind turbine rotor blade (110).

2. Method according to claim 1, wherein - in the steps of inserting - the signal transmitting device (156) and the signal receiving device (174) are inserted into the respective first bushing (140) or second bushing (142) in a form-fit manner.

3. Method according to any one of the preceding claims, wherein - in the steps of inserting - the signal transmitting device (156) and the signal receiving device (174) are screwed into the respective first bushing (140) or second bushing (142).

4. Method according to any one of the preceding claims, wherein the electromagnetic signal has a wavelength within the visible spectrum.

5. Method according to any one of the preceding claims, wherein the signal transmitting device (156) comprises a laser device (158).

6. Method according to claim 5, wherein the laser device (158) is arranged such that a laser beam emitted by the laser device (158) is coaxial with the first central longitudinal axis (150) of the first bushing (140).

7. Method according to any one of the preceding claims, wherein the signal transmitting device (156) comprises a first outer tube (160) for insertion into the first bushing (140), and an inner tube (162), wherein the laser device (158) is received within the first outer tube (160), and the inner tube (162) is screwed into the first outer tube (160) and thereby fixes the laser device (158) in the first outer tube (160).

8. Method according to any one of the preceding claims, wherein the signal transmitting device (156) comprises a first abutment element (168), which limits the insertion of the signal transmitting device (156) into the first bushing (140) .

9. Method according to any one of the preceding claims, wherein the signal receiving device (174) comprises at least a second outer tube (176) for insertion into the second bushing (142).

10. Method according to any one of the preceding claims, wherein the signal receiving device (174) comprises a second abutment element (182), which limits the insertion of the signal receiving device (174) into the second bushing (142).

11. Method according to any one of the preceding claims, wherein the signal receiving device (174) comprises a measuring disc (182) for receiving the electromagnetic signal from the signal transmitting device (156).

12. Method according to claims 10 and 11, wherein the measuring disc (182) forms the second abutment element.

13. Method according to claim 11 or 12, wherein an alignment tube (190) is arranged at a distance in front of the measuring disc (182) and the step of aligning is performed depending on the electromagnetic signal passing through the alignment tube (190).

14. Method according to any one of claims 11 to 13, wherein the measuring disc (182) is configured to display the received electromagnetic signal and has a measuring scale (186), wherein the measuring scale (186) defines a center point (188) corresponding to the second central longitudinal axis (154) of the second bushing (142), and wherein the step of aligning is performed depending on the displayed electromagnetic signal with respect to center point (188) of the measuring scale (186).

15. Method according to any one of claims 11 to 14, wherein the measuring disc (182) comprises a photosensitive layer.

16. Method according to claim 15, wherein data corresponding to a detected impact position on the measuring disc (182) is sent to a control unit which is configured to cause the first rotor blade segment (132) and/or the second rotor blade segment (134) to be automatically moved in the step of aligning depending on the data.

17. Method according to any one of the preceding claims, wherein, after the step of aligning, an orientation of both rotor blade segments (132, 134) to each other is frozen such that only a movement of the first rotor blade segment (132) or second rotor blade segment (134) is allowed along the common longitudinal axis (194).

18. Method according to claim 17, wherein the orientation of both rotor blade segments (132, 134) to each other is frozen until the two rotor blade segments (132, 134) are tightly connected.

19. Method according to any one of the preceding claims, wherein, in the step of aligning, the first rotor blade segment (132) or the second rotor blade segment (134) is translationally and rotationally movable so that the central longitudinal axes (150, 154) of the first and second bushing (140, 142) can be coaxially matched to each other to form the common longitudinal axis (194).

20. Method according to any one of the preceding claims, wherein, for aligning, the first rotor blade segment (132) or the second rotor blade segment (134) is fixedly supported on a movable support structure, in particular on a moveable skid (152) .

21. Method according to any one of the preceding claims, wherein several pairs of one signal transmitting device (156) and one signal receiving device (174) are provided, wherein for each pair the signal transmitting device (156) is inserted into a first bushing (140) of the first rotor blade segment (132) and the signal receiving device (174) is inserted into a second bushing (142) assigned to the first bushing (140), and wherein the step of aligning is performed depending on all pairs.

22. Method according to any one of the preceding claims, wherein prior to the steps of inserting, a rough alignment of both rotor blade segments (132, 134) to each other is performed, comprising the sub-steps of:
- providing a longitudinally extending alignment pin, which has at least a first longitudinal section and a second longitudinal section,
- inserting the alignment pin into the first bushing (140) such that the first longitudinal section is received in the first bushing (140) and the second longitudinal section protrudes out of the first bushing (140),
- aligning the second rotor blade segment (134) by means of the inserted alignment pin, wherein the second rotor blade segment (134) is moved onto the alignment pin, such that
-- the second longitudinal section of the alignment pin is received in the second bushing (142), and
-- a first central longitudinal axis (150) of the first bushing (140) is coaxial with a second central longitudinal axis (154) of the second bushing (142) and both central longitudinal axes (150, 154) form a common longitudinal axis (194),
- moving the second rotor blade segment (134) away from the first rotor blade segment (132) along the common longitudinal axis (194),
- removing the alignment pin from the first rotor blade segment (132).

23. Signal transmitting device (156) for a method of connecting two rotor blade segments (132, 134) of a wind turbine rotor blade (110) according to any one of the preceding claims, wherein the signal transmitting device (156) is configured to:
- be inserted into a first bushing (140) of the first rotor blade segment (132), and
- send out an electromagnetic signal to be received by a signal receiving device (174) such that, depending on a reception of the electromagnetic signal, the first rotor blade segment (132) and the second rotor blade segment (134) can be aligned relative to each other.

24. Signal receiving device (174) for a method of connecting two rotor blade segments (132, 134) of a wind turbine rotor blade (110) according to any one of the claims 1 to 22, wherein the signal receiving device (174) is configured to:
- be inserted into a second bushing (140) of the second rotor blade segment (132), and
- receive an electromagnetic signal of a signal transmitting device (156) such that, depending on the reception of the electromagnetic signal, the first rotor blade segment (132) and the second rotor blade segment (134) can be aligned relative to each other.
